# EUROPÄISCHE PATENTANMELDUNG

(11) **EP 1 174 019 A1**
(43) Veröffentlichungstag der Anmeldung: **23.01.2002**
(21) Anmeldenummer: 01117058.6
(22) Anmeldetag: 13.07.2001
(51) Int. Cl.: A01D 69/02, A01F 15/08, A01F 12/56

(54) **Erntemaschine mit elektromotorisch angetriebener Gutförder- und/oder Gutbearbeitungseinrichtung**

(30) Priorität: 18.07.2000 DE 10034784
(71) Anmelder: DEERE & COMPANY, Moline, Illinois 61265-8098 (US)
(72) Erfinder: Favache, Serge, 66424 Homburg (DE)
(74) Vertreter: Holst, Sönke, Dr.

(57) **Zusammenfassung**

Die Erfindung bezieht sich auf eine Erntemaschine (10) mit einer Gutförder- und/oder Gutbearbeitungseinrichtung (24), welche durch einen Elektromotor (46) in Drehung versetzbar ist und an ihrem Außenumfang Gutförder- und/oder Gutbearbeitungselemente (48) aufweist. Um Raum einzusparen, wird vorgeschlagen, dass der Elektromotor (46) innerhalb der Gutförder- und/oder Gutbearbeitungseinrichtung (24) angeordnet ist.

## Beschreibung

Die Erfindung betrifft eine Erntemaschine mit einer Gutförder- und/oder Gutbearbeitungseinrichtung, welche durch einen Elektromotor in Drehung versetzbar ist und an ihrem Außenumfang Gutförder- und/oder Gutbearbeitungselemente aufweist.

Im Stand der Technik werden Gutfördereinrichtungen und Gutbearbeitungseinrichtungen landwirtschaftlicher Erntemaschinen von einem Hauptmotor unter Verwendung mechanischer Kraftübertragungseinrichtungen, wie Riemen, Wellen oder Zahnrädern, angetrieben. Im Einzelfall, wie bei Einzugswalzen von Feldhäckslern, finden auch hydraulische Antriebe Verwendung. Dabei sind der Platzbedarf der mechanischen Kraftübertragungseinrichtungen, ihr Gewicht und ihre Gestehungskosten als nachteilig anzusehen.

In der GB 1 593 698 A ist eine Kombination aus einem Traktor und mehreren daran befestigten Mähgeräten beschrieben, bei dem die Mähmesser der Mähgeräte durch jeweils einen Elektromotor angetrieben werden. Die elektrische Energie in Form von Drehstrom mit einer Spannung von 400 V für die Elektromotoren wird durch einen an Bord des Traktors befindlichen Generator erzeugt. Die Elektromotore werden nicht näher beschrieben.

Die WO 94/24845 A offenbart eine selbstfahrende Großballenpresse, bei der die Elemente der Presseinrichtung durch einen Elektromotor angetrieben werden.

Es ist somit grundsätzlich bekannt, Gutbearbeitungseinrichtungen selbstfahrender Erntemaschinen durch Elektromotore anzutreiben. Abgesehen davon, dass in der GB 1 593 698 A Drehstrommotoren erwähnt werden, wird der Aufbau und die Anbringung der Motoren aber nicht näher beschrieben.

Die der Erfindung zugrunde liegende Aufgabe wird darin gesehen, eine Erntemaschine mit einer Gutförder- und/oder Gutbearbeitungseinrichtung zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke der Erfindung besteht darin, den Elektromotor platzsparend innerhalb der Gutförder- und/oder Gutbearbeitungseinrichtung anzuordnen. Auf diese Weise spart man den in bekannten Erntemaschinen für die mechanischen oder hydraulischen Kraftübertragungselemente benötigten Raum ein, so dass die Erntemaschine kompakter und leichter aufgebaut sein oder bei gegebener Größe eine größere Kapazität bzw. Durchsatzleistung aufweisen kann. Der Elektromotor ist in einem bisher ungenutzten Hohlraum geschützt angeordnet.

Es wird vorgeschlagen, zum Antrieb der Gutförder- und/oder Gutbearbeitungseinrichtung einen Elektromotor mit einem feststehenden Stator und einem drehbaren Rotor zu verwenden, bei dem der Stator innerhalb des Rotors angeordnet ist. Somit wird am Außenumfang des Elektromotors eine Drehbewegung zur Verfügung gestellt, die zum Antrieb der Gutförder- und/oder Gutbearbeitungseinrichtung der Erntemaschine genutzt werden kann.

Der Rotor kann insbesondere starr, also ohne Zwischenschaltung eines Getriebes oder anderer mechanischer Kraftübertragungselemente mit der Gutförder- und/oder Gutbearbeitungseinrichtung verbunden werden. Dadurch erübrigen sich Kraftübertragungselemente. Falls die gewünschte Drehzahl der Gutförder- und/oder Gutbearbeitungseinrichtung jedoch stark von der erreichbaren Drehzahl des Elektromotors abweicht, kann ein insbesondere mechanisches Getriebe zwischen den Rotor des Elektromotors und die Gutförder- und/oder Gutbearbeitungseinrichtung geschaltet werden. Dazu kommt beispielsweise ein Planetengetriebe in Frage, bei dem das Sonnenrad mit dem Rotor verbunden ist und das Ringrad mit der Gutförder- und/oder Gutbearbeitungseinrichtung verbunden ist. Der Planetenradträger kann je nach gewünschtem Übersetzungsverhältnis mit dem Sonnenrad verbunden oder ortsfest sein. Auch ein separater Antrieb für den Planetenradträger ist denkbar.

Der Stator des Elektromotors kann auf einer Achse angeordnet sein, die in der Regel am Fahrgestell der Erntemaschine befestigt ist. Die Achse kann auch zur Lagerung der Gutförder- und/oder Gutbearbeitungseinrichtung dienen.

Für den Elektromotor sind grundsätzlich alle bekannten Bauformen verwendbar. Es kann ein Gleichstrommotor oder ein Wechselstrommotor Verwendung finden, insbesondere ein Drehstrommotor. Der Motor wird vorzugsweise durch einem Generator mit elektrischer Energie versorgt, der vom Hauptmotor der Erntemaschine angetrieben wird. Findet ein Gleichstromgenerator Verwendung, oder soll der Elektromotor vom Bordnetz der Erntemaschine versorgt werden, kann ein Wechsel- oder Drehstrommotor mittels eines geeigneten Wechselrichters betrieben werden.

Die Drehzahl bzw. das Drehmoment des Elektromotors ist vorzugsweise einstellbar und vorzugsweise auch regelbar. Dadurch kann die Drehzahl oder das Drehmoment der Gutförder- und/oder Gutbearbeitungseinrichtung unproblematisch den jeweiligen Erntegutbedingungen angepasst werden.

Vom Elektromotor kann, wie bereits dargelegt, eine Gutförder- und/oder Gutbearbeitungseinrichtung angetrieben werden. Eine Gutbearbeitungseinrichtung ist eine Einrichtung, die den Zustand des Gutes ändert, es also beispielsweise (ab-) schneidet, häckselt, drischt, trennt, reinigt, etc., wie beispielsweise die Dreschtrommel eines Mähdreschers mit Strohschüttlern oder einem oder mehreren nachgeordneten Trennrotoren. Bei einem Axialmähdrescher ist der Trennrotor, der Korn aus dem Erntegut heraustrennt, bzw. ein kombinierter Dresch- und Trennrotor, eine durch den Elektromotor antreibbare Gutbearbeitungseinrichtung. Auch ein Gebläse der Reinigungseinrichtung eines Mähdreschers bearbeitet das Gut und kann durch den Elektromotor angetrieben werden. Eine Gutbearbeitungseinrichtung ist auch die Häckseltrommel eines Feldhäckslers.

Eine Gutfördereinrichtung dient zum Fördern des Gutes. Beispiele sind Schrägförderer, Leit- und Wendetrommeln von Mähdreschern sowie Zuführwalzen und Gebläse zum Fördern des Häckselgutes bei Feldhäckslern.

In den Zeichnungen ist ein nachfolgend näher beschriebenes Ausführungsbeispiel der Erfindung dargestellt. Es zeigt:
- Fig. 1: eine Erntemaschine mit einer Dreschtrommel, die durch einen Elektromotor angetrieben wird, und
- Fig. 2: einen Schnitt durch die Dreschtrommel aus Figur 1.

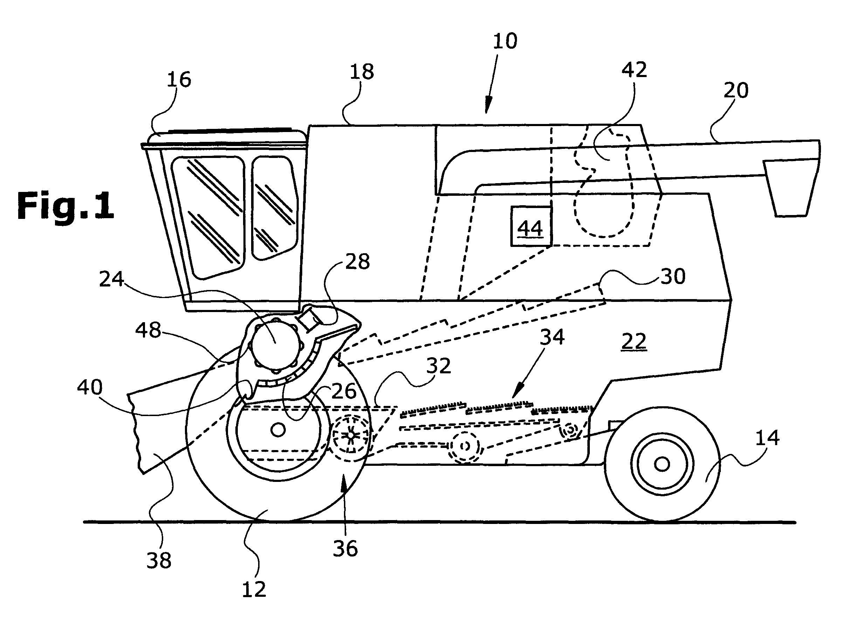

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen mit über seinen Umfang verteilten Dreschelementen 48 ausgestatteten Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

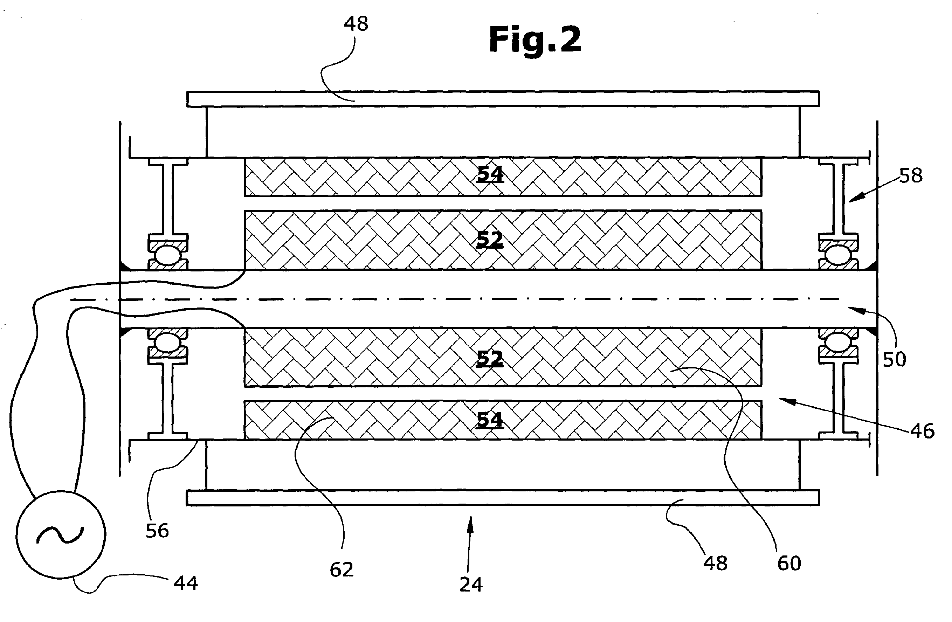

Die Erntemaschine 10 weist einen Hauptmotor 42 auf, der einen elektrischen Generator 44 antreibt. Der Hauptmotor 42 ist ein Verbrennungsmotor, in der Regel ein Dieselmotor. Der Generator 44 versorgt an den vorderen Rädern 12 angeordnete Elektromotore mit elektrischer Energie. Außerdem versorgt er einen die Dreschtrommel 24 antreibenden Elektromotor 46 (s. Figur 2) mit elektrischer Energie. Auch die Wendetrommel 28, das Gebläse 36, der Schrägförderer 38, die Schüttler 30 und die übrigen Gutfördereinrichtungen der Erntemaschine 10 können durch Elektromotore angetrieben werden, die mit dem Generator 44 verbunden sind.

In Figur 2 ist die Dreschtrommel 24 mit den außen an ihr angebrachten Dreschelementen 48 im Schnitt wiedergegeben. Innerhalb der Dreschtrommel 24 ist ein Elektromotor 46 angeordnet, der aus einem stationären, auf einer Achse 50 angeordneten Stator 52 und einem drehbaren Rotor 54 aufgebaut ist. Der Stator 52 ist innerhalb des Rotors 54 angeordnet. Der Rotor ist an der Innenseite des trommelförmigen Gehäuses 56 der Dreschtrommel 24 befestigt, an dem außen die Dreschelemente 48 angebracht sind. Die Achse 50 ist am Rahmen 22 der Erntemaschine befestigt. Seitenwände 58 des Gehäuses 56 der Dreschtrommel 24 sind durch Kugellager auf der Achse 50 gelagert.

Der Stator 52 und der Rotor 54 weisen Drahtwicklungen 60, 62 auf, die mit dem Generator 44 elektrisch verbunden sind. Dabei können die Drahtwicklungen des Rotors 54 in an sich bekannter Weise durch Schleifkontakte an der Achse 50 mit dem Generator 44 in Verbindung stehen. Die von elektrischem Strom durchflossenen Drahtwicklungen 60, 62 erzeugen Magnetfelder, durch die der Rotor 54 in Drehung versetzt wird, so dass sich die Dreschtrommel 24 zum Dreschen des Ernteguts dreht. Zwischen den Generator 44 und den Elektromotor 46 ist noch eine in der Zeichnung nicht dargestellte Steuerung geschaltet, die zum Einstellen der Drehzahl dient.

## Patentansprüche

1. Erntemaschine mit einer Gutförder- und/oder Gutbearbeitungseinrichtung, welche durch einen Elektromotor in Drehung versetzbar ist und an ihrem Außenumfang Gutförder- und/oder Gutbearbeitungselemente aufweist, **dadurch gekennzeichnet, dass** der Elektromotor innerhalb der Gutförder- und/oder Gutbearbeitungseinrichtung angeordnet ist.

2. Erntemaschine nach Anspruch 1, **dadurch gekennzeichnet, dass** der Elektromotor einen Stator aufweist, der innerhalb eines drehbaren Rotors angeordnet ist, und dass der Rotor antriebsmäßig mit der Gutförder- und/oder Gutbearbeitungseinrichtung verbunden ist.

3. Erntemaschine nach Anspruch 1 oder 2, **dadurch gekennzeichnet, dass** der Rotor starr mit der Gutförder- und/oder Gutbearbeitungseinrichtung verbunden ist.

4. Erntemaschine nach einem der Ansprüche 1 bis 3, **dadurch gekennzeichnet, dass** die Gutförder- und/oder Gutbearbeitungseinrichtung an einer Achse des Stators gelagert ist.

5. Erntemaschine nach einem der vorhergehenden Ansprüche, **dadurch gekennzeichnet, dass** der Elektromotor ein Gleichstrommotor oder ein Wechselstrommotor, insbesondere ein Drehstrommotor, ist und durch einen vom Hauptmotor der Erntemaschine angetriebenen Generator mit elektrischer Energie beaufschlagt wird.

6. Erntemaschine nach einem der vorhergehenden Ansprüche, **dadurch gekennzeichnet, dass** die Drehzahl und/oder das Drehmoment des Elektromotors einstellbar bzw. regelbar ist.

7. Erntemaschine nach einem der vorhergehenden Ansprüche, **dadurch gekennzeichnet, dass** die Gutförder- und/oder Gutbearbeitungseinrichtung eine Dreschtrommel oder ein Dresch- und/oder Trennrotor oder eine Häckseltrommel oder ein Gebläse oder eine Fördertrommel ist.
